# EUROPÄISCHE PATENTSCHRIFT

(11) **EP 2 425 718 B1**
(45) Veröffentlichungstag und Bekanntmachung des Hinweises auf die Patenterteilung: **30.03.2016**
(21) Anmeldenummer: 10013464.2
(22) Anmeldetag: 08.10.2010
(51) Int. Cl.: A22C 5/00, A23L 19/00, A23L 19/12, B02C 18/30, B02C 18/36, B01F 7/00

(54) **Verfahren und Vorrichtung zur Herstellung von pürierter Nahrung**
Method and device for producing purified food
Procédé et dispositif destinés à la fabrication d'aliments en purée

(30) Priorität: 06.09.2010 DE 102010044630
(43) Veröffentlichungstag der Anmeldung: 07.03.2012
(73) Patentinhaber: Stephan Machinery GMBH, 31789 Hameln (DE)
(72) Erfinder: Klöpping, Dorothee, 33189 Schlangen (DE); Brockmann, Gerhard, 31855 Aerzen (DE); Rose, Henry, 33165 Lichtenau (DE)
(74) Vertreter: Reichert & Lindner Partnerschaft Patentanwälte

(56) Entgegenhaltungen:
- EP-A1- 1 346 650
- EP-A2- 0 850 572
- WO-A1-98/28079
- GB-A- 869 142
- US-A- 4 543 879
- KLÖPPING D: "Mehrere Prozessschritte in einer Anlage. Schonende Herstellung von pürierten Lebensmitteln", ERNAEHRUNGSINDUSTRIE, LEINFELDEN-ECHTERDINGEN, DE, Nr. 3, 1. März 2009 (2009-03-01), Seiten 16-17, XP009143518, ISSN: 0343-9704
- Kenwood: "Programm 2008/2009", , 1. August 2008 (2008-08-01), Seiten 1-36, XP002618925, Gefunden im Internet: URL:http://www.kenwood.ch/fileadmin/files/ PDF_Programm/KS_Programm_2008_d.pdf [gefunden am 2011-01-26]
- Anonymous: "Der Küchen-Allrounder", Testmagazin, Bd. 09, Nr. 49 1. September 2009 (2009-09-01), Seiten 68-73, XP002618926, Gefunden im Internet: URL:http://www.thermomix.de/pdf/2009_09_te stmagazin_tm31.pdf [gefunden am 2011-01-26]
- Anonymous: "Handrührer und Stabmixer: Fix und flexibel", test, 1. Januar 2003 (2003-01-01), Seiten 61-65, XP002618927, Gefunden im Internet: URL:http://www.test.de/themen/haus-garten/ test/Handruehrer-und-Stabmixer-Fix-und-fle xibel-1074614-1075132/ [gefunden am 2011-01-26]

## Beschreibung

Die Erfindung betrifft ein Verfahren zum Herstellen von pürierten, gekochten Nahrungsmitteln aus stückiger Rohware, insbesondere zur Verwendung als Nahrung für Kleinkinder oder Senioren, nach dem Oberbegriff des Anspruchs 1 sowie eine Vorrichtung zum Herstellen von pürierten, gekochten Nahrungsmitteln aus stückiger Rohware nach dem Oberbegriff des Anspruchs 9.

Es ist aus der Praxis bekannt, ein breites Spektrum an Gemüse- und Fleischarten zu pürierten Convenience-Food-Produkten zu verarbeiten. Dabei können sowohl frische als auch tiefgekühlte Rohwaren verarbeitet werden. Grundlegende Schritte gattungsgemäßer Verfahren sind dabei die Zerkleinerung und das Kochen des Gemüses oder des Fleischs sowie die anschließende Kühlung und gegebenenfalls eine Endbearbeitung. Dabei wird das in relativ großen Stücken, zum Beispiel als ganze Karotten oder Kartoffeln, vorliegende Rohmaterial zunächst in Würfel mit einer Kantenlänge von etwa 10 mm geschnitten und dann von einem Fleischwolf weiter zerkleinert. Dabei werden üblicherweise Lochscheiben mit 3 mm bis 8 mm Durchmesser genutzt. Diese Art der Zerkleinerung ist mit Qualitätseinbußen verbunden, da das Produkt gequetscht wird, Zellen beschädigt werden und das Produkt zumindest teilweise entsaftet wird. Flüssige und feste Komponenten des Produkts separieren und machen sowohl die Weiterverarbeitung als auch die Qualität des Endprodukts problematisch.

Üblicherweise wird das zerkleinerte Produkt sodann mittels einer Kreiskolbenpumpe zu einer Bandkochanlage gefördert. Aufgrund der Separation fester und flüssiger Bestandteile ist es schwierig, einen kontinuierlichen Materialstrom durch die Pumpe und damit auch in die Bandkochanlage sicherzustellen, womit auch ein ungleichmäßiger Grad der Garheit des Endprodukts verbunden sein kann. Gebräuchliche Bandkochanlagen sind zudem offen ausgeführt, sodass das Produkt während des Kochvorgangs mit der Raumluft in Kontakt ist und Inhaltsstoffe oxidiert werden können. Damit können die Farbe und der Geschmack des Produkts beeinflusst werden und es ergibt sich ein minderwertiges Endprodukt. Weiterhin ergibt sich durch die offene Bauweise eine mangelhafte Energieeffizienz, da sowohl Wärme als auch Feuchtigkeit unkontrolliert entweichen können.

In diesen aus der Praxis bekannten Verfahren wird zur Endbearbeitung ein Feinstzerkleinerer, der mit einem offenen Trichter ausgestattet ist, eingesetzt. Das Produkt kommt wiederum mit der Raumluft in Kontakt und kann weiter oxidieren. Eine nach einem bekannten Verfahren arbeitende Kochanlage hat einen Platzbedarf von ca. 3 m mal 10 m, sodass eine kompaktere Anlage wünschenswert ist.
Die EP1346650A1 offenbart ein im wesentlichen kontinuierliches Verfahren zur Herstellung eines niederviskosen breiartigen (pürierten) Nahrungsmittels unter Verwendung von Nahrungsmittelausgangsprodukten mit einem Wassergehalt von mehr als 45 Gew.-%. Die Ausgangsprodukte werden in ganzer, stückiger, geraspelter oder gemahlener Form einem ersten Arbeitsabschnitt einer Vorrichtung vom Extrudertyp zugeführt, in dem ein Zerkleinern oder weiteres Zerkleinern sowie Kochen der Ausgangsprodukte erfolgt, wobei das Kochen vor, während und/oder nach dem Zerkleinern erfolgt. Die zerkleinerten und gekochten Ausgangsprodukte werden dann einem zweiten Arbeitsabschnitt des Extruders zuführt, in dem eine Temperaturbehandlung unter UHT-Bedingungen oder unter Pasteurisierungsbedingungen erfolgt. Die UHT-behandelten oder pasteurisierten Produkte werden dann entgast und aus dem Extruder direkt einer Verpackungsstation zugeführt.
Aus KLÖPPING D: "Mehrere Prozessschritte in einer Anlage. Schonende Herstellung von pürierten Lebensmitteln", ERNAEHRUNGSIN-DUSTRIE, LEINFELDEN-ECHTERDINGEN, DE, Nr. 3, 1. März 2009 (2009-03-01), Seiten 16-17, XP009143518, ISSN: 0343-9704 ist eine Vorrichtung zum Herstellen von pürierten, gekochten Nahrungsmitteln aus stückiger Rohware bekannt, mit einem Zerkleinerungswerkzeug mit mehreren Messern, die über einen Motor angetrieben werden, und einer Direktdampfinjektion zum Erwärmen oder Erhitzen, wobei das Zerkleinerungswerkzeug und die Direktdampfinjektion in einem gemeinsamen Prozessbehälter untergebracht sind.
Aus Kenwood: "Programm 2008/2009", 1. August 2008 (2008-08-01), Seiten 1-36, XP002618925, URL: http://www.kenwood.ch/fileadmin/files/PDF Programm/KS Programm 20 08 d.pdf, Anonymous: "Der Küchen-Allrounder", Testmagazin, Bd. 09, Nr. 49 1. September 2009 (2009-09-01), Seiten 68-73, XP002618926, URL: http://www.thermomix.de/pdf/2009 09 testmagazin tm31.pdf und Anonymous: "Handrührer und Stabmixer: Fix und flexibel", test, 1. Januar 2003 (2003-01-01), Seiten 61-65, XP002618927, URL: http://www.test.de/themen/haus-garten/test/Handruehrer-und-Stabmixer-Fix-und-flexibel-1074614-1075132/ sind rotierende Messersystem für die Zerkleinerung von Rohmaterialien bekannt.

Die Aufgabe der vorliegenden Erfindung ist es, ein Verfahren sowie eine Vorrichtung zu Herstellen von pürierten, gekochten Nahrungsmitteln bereitzustellen, die eine Quetschung des Rohmaterials und somit eine Separation von fester und flüssiger Phase weitgehend vermeiden.

Diese Aufgabe wird mit einem Verfahren zum Herstellen von pürierten, gekochten Nahrungsmitteln aus stückiger Rohware nach dem Anspruch 1 gelöst.

Dem erfindungsgemäßen Verfahren entsprechend wird die Rohware in einer Vorzerkleinerungsstufe mit einem Messersystem so klein geschnitten, dass sie von einer Pumpe weitertransportiert und einer kontinuierlich beschickbaren Kochanlage zugeführt werden kann. Durch den ausschließlichen Einsatz eines Messersystems zur Vorzerkleinerung der stückigen Rohware wird diese lediglich geschnitten und nicht gequetscht, sodass, verglichen mit herkömmlichen Verfahren, die Produktqualität gesteigert wird, da es im Vergleich zu den gebräuchlichen Methoden, wie der Verarbeitung durch die Lochscheiben eines Fleischwolfs, zu wesentlich weniger Beschädigungen der Zellstruktur des Rohmaterials und somit zu keiner wesentlichen Entsaftung des Produkts kommt. Dies führt einerseits zu einer höheren Qualität des Endprodukts, und andererseits zu einer besseren Handhabbarkeit des vorzerkleinerten Rohmaterials, da sich keine festen und flüssigen Phasen bilden und somit ein Verstopfen der der Vorzerkleinerung folgenden Pumpe sicher vermieden werden kann.

Vorteilhafterweise erfolgt die Vorzerkleinerung in der Vorzerkleinerungseinheit mittels eines rotierenden Messersystems, das aus Vorschneidemessern und einer Rotor-Stator-Einheit, die von einem gemeinsamen Antrieb angetrieben werden und vorzugsweise in der Drehgeschwindigkeit geregelt werden, besteht.

Die Pumpe kann gleichmäßig beschickt werden, sodass in der Folge auch die kontinuierlich beschickbare Kochanlage mit einem konstanten Volumenstrom von Rohmaterial versorgt werden kann. In der Kochanlage kann das Rohmaterial dann mengenproportional mit Direktdampf vermischt und erhitzt werden. Die Durchsatzleistung des Systems ist dabei regelbar. Während des Kochens kann das Produkt mittels eines integrierten Messersystems mit Rotor und Stator weiter zerkleinert werden.

Vorzugsweise bildet die Vorzerkleinerungseinheit zusammen mit der kontinuierlich beschickbaren Kochanlage ein geschlossenes System, sodass die verarbeiteten Nahrungsmittel nicht mit der Raumluft in Kontakt gelangen, wodurch unerwünschte Oxidationsreaktionen minimiert werden. Auch diese Merkmale des Verfahrens führen zu einer gesteigerten Qualität des Endprodukts. Weiterhin verbessert sich die Energieeffizienz des Gesamtsystem, da kein Dampf ungewollt entweicht und somit Feuchtigkeitsverluste wirksam vermieden und Energieverluste minimiert werden.

Weiterhin vorzugsweise wird das erfindungsgemäße Verfahren in einem komplett geschlossenen System ausgeführt, sodass die Nahrungsmittel nach Kochen, Endverarbeitung und der Verpackung erst wieder beim Verbraucher mit der Raumluft in Kontakt kommen, sodass unerwünschte Oxidationsreaktionen, die das Endprodukt geschmacklich und qualitativ negativ beeinflussen könnten, weiter minimiert werden. Ebenso wird eine Kontamination oder Verunreinigung des Produkts ausgeschlossen.

Das mit Direktdampf erhitzte Produkt kann dann zum Garen kontinuierlich einem Röhrenheißhalter zugeführt werden. In Abhängigkeit von dem zu verarbeitenden Produkt und der gewünschten Endqualität können verschiedene Garzeiten eingestellt werden. Mit einem angeschlossenen Kühlsystem kann das Produkt auf unter 95 °C gekühlt und in der Folge entspannt werden, sodass ein schlagartiges Verdampfen von Wasser vermieden wird.

Erfindungsgemäß wird das Produkt nach dem Garen mittels einer Endbearbeitungseinheit, die ein weiteres Messersystem enthält, endzerkleinert. Auch dieses Messersystem kann zumindest einen Rotor und einen Stator umfassen und in der Drehgeschwindigkeit regelbar sein.

In einer Weiterbildung der Erfindung ist vorgesehen, den Produktdruck P_{prod} am Eingang der Vorzerkleinerungseinheit zu messen. Dadurch ergibt sich die Möglichkeit, die Zuführgeschwindigkeit der Rohware, die beispielsweise über eine Förderschnecke zugeführt werden kann, so zu optimieren, dass der optimale Durchsatz erreicht wird, ein Verstopfen der Anlage und somit ein Produktionsstillstand aber zuverlässig vermieden wird. Durch Vergleich des gemessenen Produktdrucks P_{prod} mit einem vorher separat bestimmten, produktabhängigen Referenzdruck P_{ref} kann die optimale Zuführgeschwindigkeit ermittelt und eingestellt werden. Die automatische Regelung funktioniert dabei unabhängig von dem eingesetzten Feinschneidesystem. Lediglich der Referenzdruck P_{ref} muss für jedes Produkt separat bestimmt werden, da z. B. frisches Brot einem geringeren Druck standhält als beispielsweise rohe Möhren. Durch eine solche Ausgestaltung der Erfindung lässt sich der Durchsatz der Anlage deutlich erhöhen. Gleichzeitig wird eine nur geringe Temperaturerhöhung des Produkts realisiert, sowie Verstopfungen und der Bruch der Messer der Schneidsysteme verhindert.

Zur Lösung der Aufgabe wird weiterhin eine Vorrichtung zum Herstellen von pürierten, gekochten Nahrungsmitteln aus stückiger Rohware, insbesondere zur Verwendung als Nahrung für Kleinkinder oder Senioren, nach dem Anspruch 9 geschaffen.

Der ausschließliche Einsatz eines rotierenden Messersystems zur Zerkleinerung der stückigen Rohware, bevor diese gekocht wird, bewirkt neben einer Qualitätssteigerung des Endprodukts eine höhere Zuverlässigkeit im Betrieb der Pumpe zum Transportieren der pumpfähigen Masse und bietet somit auch prozessuale Vorteile.

Vorzugsweise sind die einzelnen Module wie auch die gesamte Vorrichtung derart ausgeführt, dass sie ein geschlossenes System bilden und die verarbeiteten Nahrungsmittel nach der Zuführung zu dem ersten Messersystem während des weiteren Herstellungsverfahrens nicht mit der Raumluft in Kontakt kommen. Unerwünschte Oxidationsreaktionen und Verunreinigungen können so wirksam vermieden werden.

Das rotierende Messersystem der Vorzerkleinerungseinheit umfasst vorzugsweise zumindest einen Stator, einen Rotor und eine Förderscheibe.

Um die Feinheit der Konsistenz des Endprodukts einstellen zu können, kann das rotierende Messersystem der Endbearbeitungseinheit besonders kleine Messerspalte aufweisen. Messerspalte von 0,05 mm und darunter sind möglich.

Die Rotor-Stator-Systeme der eingesetzten Messersysteme können kontaktfrei arbeiten, sodass ein Metall/Metall-Kontakt vermieden und somit die Lebensdauer der Systeme erhöht wird.

Am Eingang der Vorzerkleinerungseinheit kann vorzugsweise ein Drucksensor angeordnet sein. Dadurch lässt sich der Durchsatz der Anlage maximieren und gleichzeitig die Zuverlässigkeit erhöhen, da Verstopfungen, Stillstand und Messerbrüche vermieden werden. Weiterhin ergibt sich eine nochmals produktschonendere Verarbeitung, da Quetschungen am Eingang der Vorzerkleinerungseinheit vermieden werden.

Vorzugsweise ist ein rotierendes Messersystem zur Zerkleinerung von Nahrungsmitteln vorgesehen, das einen Vorschneider und zumindest zwei Schneidsätze aufweist. Das unzerkleinerte Produkt wird dabei von dem Vorschneider zunächst grob zerkleinert und in der Folge von den zumindest zwei Schneisätzen weiter zerkleinert. Die Schneidsätze umfassen jeweils einen Rotor bzw. Schneidkopf und einen Stator bzw. Schneidring. Die Begriffspaare Rotor/Schneidkopf und Stator/Schneidring haben dabei jeweils dieselbe Bedeutung und können synonym gebraucht werden. Vorteilhafterweise weist dabei ein später durchlaufener Schneidsatz geringere Messerspalte auf als der bzw. die jeweils vorher durchlaufenen Schneidsatz, damit eine progressive Zerkleinerung des Produkts realisiert wird.

Erfindungsgemäß kann der Vorschneider an das zu bearbeitende Produkt und gegebenenfalls an die nachfolgenden Schneidsätze angepasst werden, indem eine variable Anzahl von Klingen, also z.B. 3, 4 oder 6 Klingen, montierbar ist. Drei oder mehr nachfolgende Schneidsätze sind ebenfalls denkbar.

Der Aufbau des Messersystems mit einem Vorschneider und zumindest zwei Schneidsätzen ermöglicht eine relativ genau definierte Erwärmung des Produkts bei der Verarbeitung. Dies ist für viele tiefgekühlte Rohwaren von Vorteil, da so auf eine separate Auftaustufe verzichtet werden kann. Auch die Verarbeitung von schokoladehaltigen Produkten wird möglich.

Mit Hilfe einer Zeichnung soll ein Ausführungsbeispiel der Erfindung nachfolgend näher beschrieben werden. Es zeigen:
- Figur 1 -: eine Ansicht einer erfindungsgemäßen Vorrichtung zur Durchführung eines erfindungsgemäßen Verfahrens,
- Figur 2 -: eine perspektivische Ansicht der Vorzerkleinerungseinheit,
- Figur 3 -: eine Explosionsansicht der Vorzerkleinerungseinheit,
- Figur 4 -: eine perspektivische Ansicht der Kochanlage,
- Figur 5 -: eine Explosionsansicht des Messersystems, das in der Kochanlage integriert ist,
- Figur 6 -: eine perspektivische Ansicht des Röhrenheißhalters, sowie
- Figur 7 -: eine Explosionszeichnung des Messersystems der Endbearbeitungseinheit,
- Figur 8 -: eine Explosionszeichnung eines Messersystems mit zwei Schneidsätzen,
- Figur 9 -: ein Ausführungsbeispiel einer Förderschnecke mit Drucksensor und
- Figur 10 -: ein Steuerungsschema für die Geschwindigkeitsregelung der Zuführschnecke.

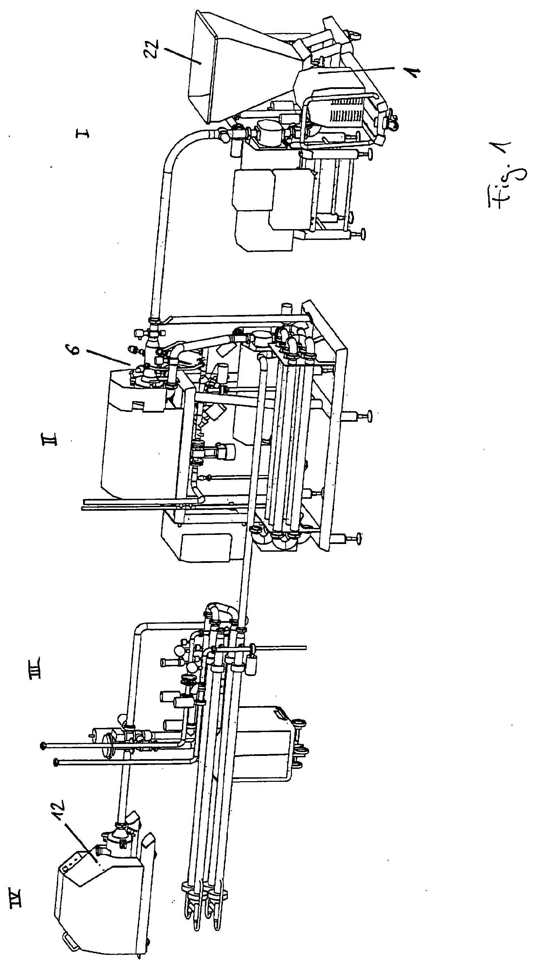

Figur 1 zeigt einen Überblick über eine Anlage zur Durchführung eines erfindungsgemäßen Verfahrens. Die Rohware wird dabei in den Trichter 22 eingefüllt und durchläuft dann, in der Figur von rechts nach links, nacheinander die Bereiche Vorzerkleinerung I mit der Vorzerkleinerungseinheit 1, Erhitzung mittels Direktdampf in der Kochanlage 6, Feinzerkleinerung und Garung im Röhrenheißhalter II, Kühlsystem III und Endbearbeitung IV mit der Endbearbeitungseinheit 12. Das gesamte System ist geschlossen ausgeführt, sodass die verarbeiteten Nahrungsmittel nach dem Einfüllen in den Trichter 22 nicht mehr mit der Umgebungsluft in Kontakt kommen. Weiterhin hat die in Figur 1 gezeigte Anlage einen deutlich geringeren Platzbedarf als Anlagen, die nach einem herkömmlichen Verfahren arbeiten.

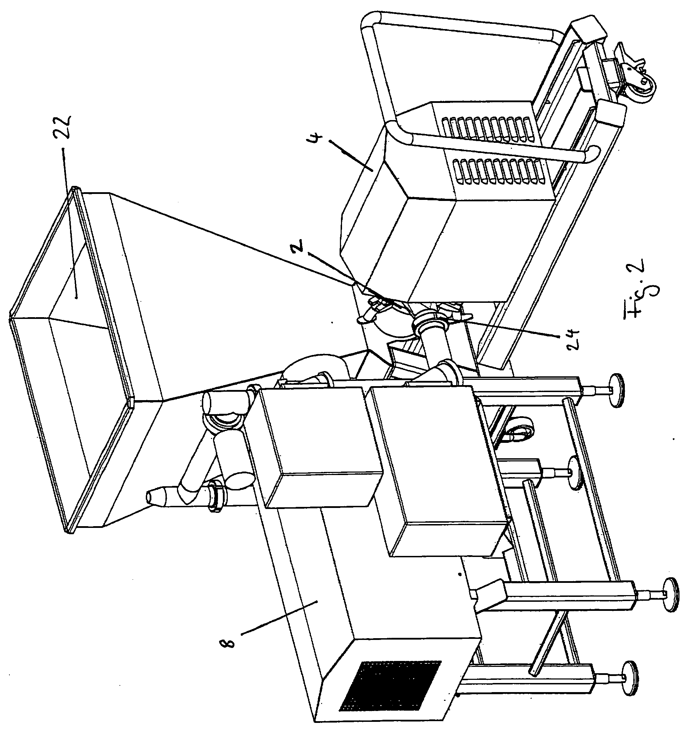

Figur 2 zeigt eine detaillierte Ansicht des Bereichs I aus Figur 1. Die unzerkleinerte Rohware wird dem Trichter 22 über einen hier nicht dargestellten Mechanismus, wie zum Beispiel eine Förderschnecke; zugeführt. Die stückige Rohware wird dann von dem Messersystem 2, das einen eigenen Antrieb 4 besitzt, zerkleinert und durch den tangentialen Austritt 24 mittels einer Pumpe 8 weiter transportiert.

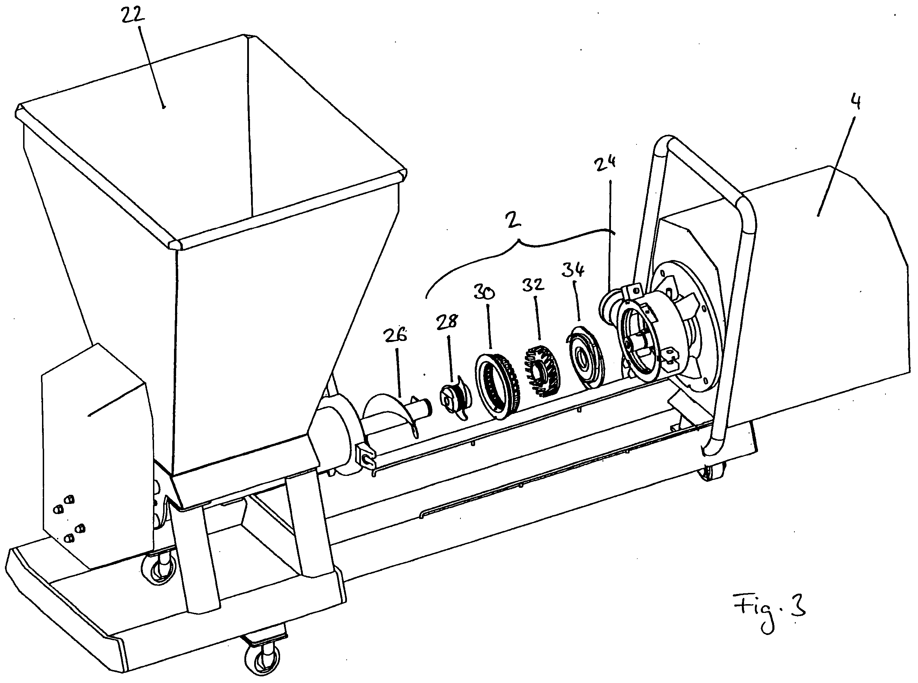

In Figur 3 ist der Aufbau des Messersystems 2 der Vorzerkleinerungseinheit 1 dargestellt. Die unzerkleinerte Rohware wird in den Trichter 22 gegeben und dann von der wiederum mit einem eigenen Antrieb ausgestatten Zuführschnecke 26 in der Zeichnung nach rechts transportiert. Dieser Transport erfolgt auf für die Rohware schonende Art und Weise, sodass sie nicht beschädigt wird. Das Messersystem 2 besteht aus einem Vorschneider 28, einem Stator 30 mit spezifischen Messerspalten, einem Rotor 32 mit einer auf den Einsatzzweck angepassten Anzahl an Zähnen sowie einer Förderscheibe 34. Von diesem Messersystem 2 werden die Rohwaren ausschließlich geschnitten und nicht, wie bei herkömmlichen Zerkleinerungsverfahren, gequetscht, sodass das Austreten von Flüssigkeit minimiert und die Pumpfähigkeit der zerkleinerten Rohware sichergestellt wird. Das Messersystem 2 ist frequenzgeregelt und kann Drehzahlen von bis zu 4000 Umdrehungen pro Minute oder mehr erreichen. Durch den tangentialen Austritt 24 verlässt die zerkleinerte Rohware das Messersystem 2. Die Orientierung des tangentialen Austritts 24 bezüglich der Rotationsachse und damit die Richtung des Weitertransports kann dabei den räumlichen Gegebenheiten angepasst werden.

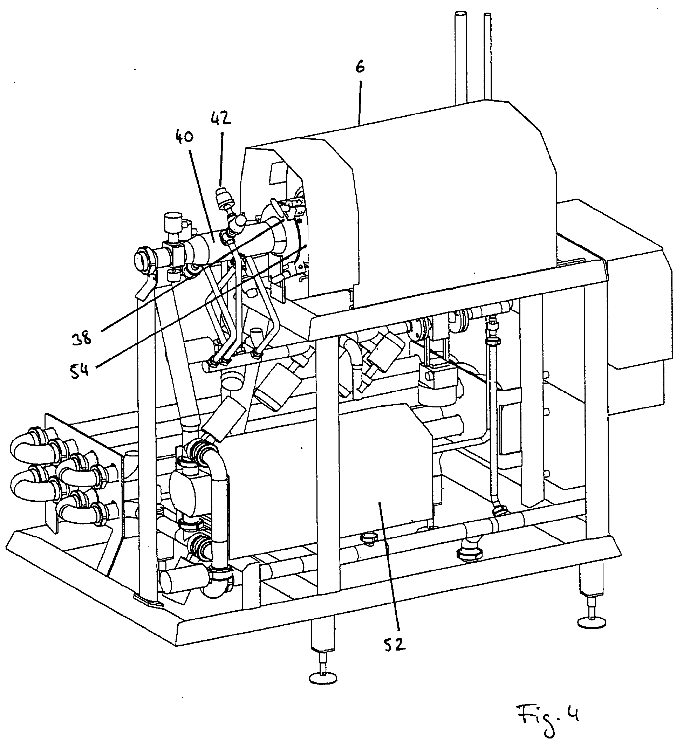

Figur 4 zeigt eine Ansicht des Bereichs II aus Figur 1, in dem die Rohware durch Vermischung mit Direktdampf erhitzt wird. Dabei wird die vorzerkleinerte Rohware - in der Zeichnung von links - dem Vormischbereich 40 zugeführt. Durch die spezifisch konstruierten Dampfdüsen 42 wird kontinuierlich und mengenproportional so viel Dampf zugegeben, dass die gewünschte Temperatur erreicht wird. Innerhalb der Kochanlage 6 befindet sich ein weiteres Messersystem 38, das das Produkt während des Erhitzens weiter zerkleinert. Der injizierte Dampf kondensiert in dem unter Druck stehenden Messersystem 38 und tritt über den tangentialen Austritt am Gehäuse 54 aus. Über die nachfolgende Pumpe 52 wird der Druck in dem Messersystem 38 geregelt, wodurch auch Erhitzungstemperaturen von über 100 °C realisiert werden können.

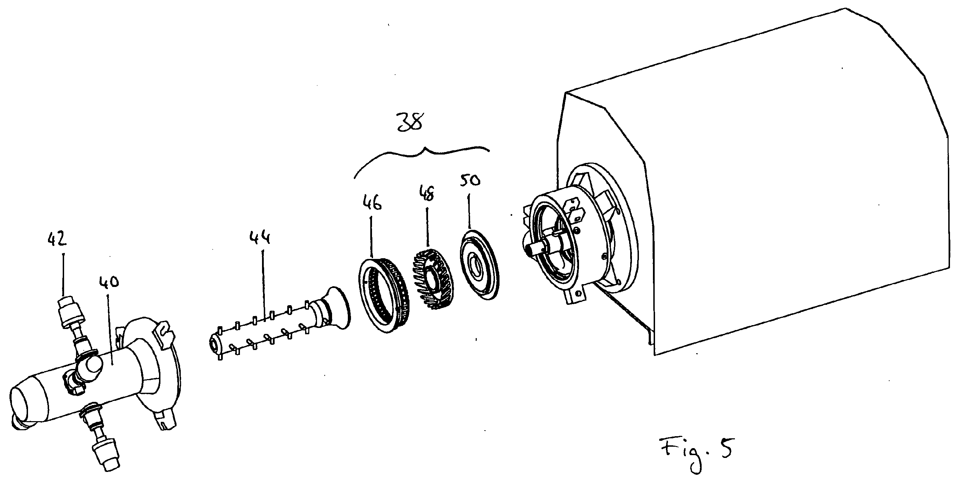

Figur 5 zeigt eine detaillierte Explosionsdarstellung der Kochanlage 6 aus Figur 4. Es sind zu sehen der bereits in Figur 4 beschriebene Vormischbereich 40 mit den Dampfdüsen 42 sowie die Mischwelle 44, der Stator 46 mit spezifischen Messerspalten, der Rotor 48 mit einer auf den Einsatzzweck abgestimmten Anzahl von Zähnen sowie die Förderscheibe 50.

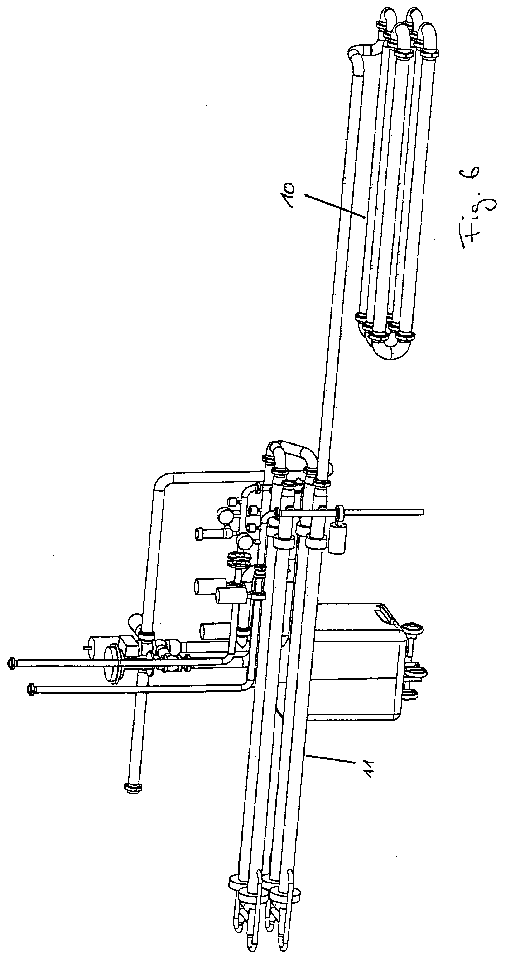

Figur 6 zeigt den Röhrenheißhalter 10 aus dem Bereich II und das Kühlsystem 11 aus Bereich III der Figur 1. Das zerkleinerte und bereits erhitzte Produkt durchläuft mehrere parallel liegende Rohre und wird dabei gegart. Es wird in der Zeichnung rechts unten in das Rohrsystem eingespeist und verlässt dieses im linken oberen Bereich der Figur wieder. Durch Anpassung des Rohrsystems können verschiedene Garzeiten realisiert werden und somit Produkte mit unterschiedlichen Anforderungen verarbeitet werden. In der Folge wird das Produkt im Kühlsystem 11 auf eine Temperatur zumindest unterhalb 95 °C gekühlt, sodass nach der Abkühlung das Produkt entspannt werden kann und ein schlagartiges Verdampfen des Wassers vermieden wird.

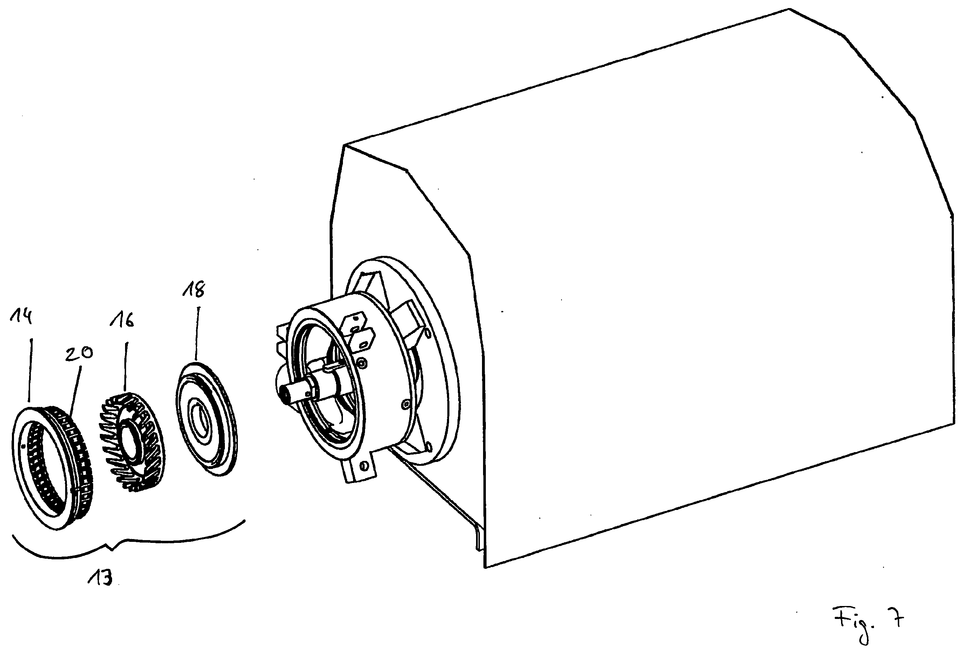

Figur 7 zeigt eine Explosionsdarstellung des Endbearbeitungssystems 12 aus Abschnitt IV in Figur 1. Das dabei zum Einsatz kommende Messersystem 13 besteht ebenfalls aus einem Stator 14 mit spezifischen Messerspalten 20, einem Rotor 16 mit einer auf den Einsatzzweck abgestimmten Anzahl von Zähnen, sowie einer Förderscheibe 18. Das Messersystem 13 kann frequenzgeregelt werden und Umdrehungszahlen von 4000 Umdrehungen pro Minute oder mehr erreichen. Durch das Einstellen der Umdrehungszahl und den gewählten Messerspalt 20 kann der Feinheitsgrad des Endprodukts eingestellt werden. Messerspalte 20 von 0,05mm sind, in Abhängigkeit von der gewünschten Vereinheitlichung des Produkts, ebenso wie größere oder kleinere Messerspalte 20, möglich.

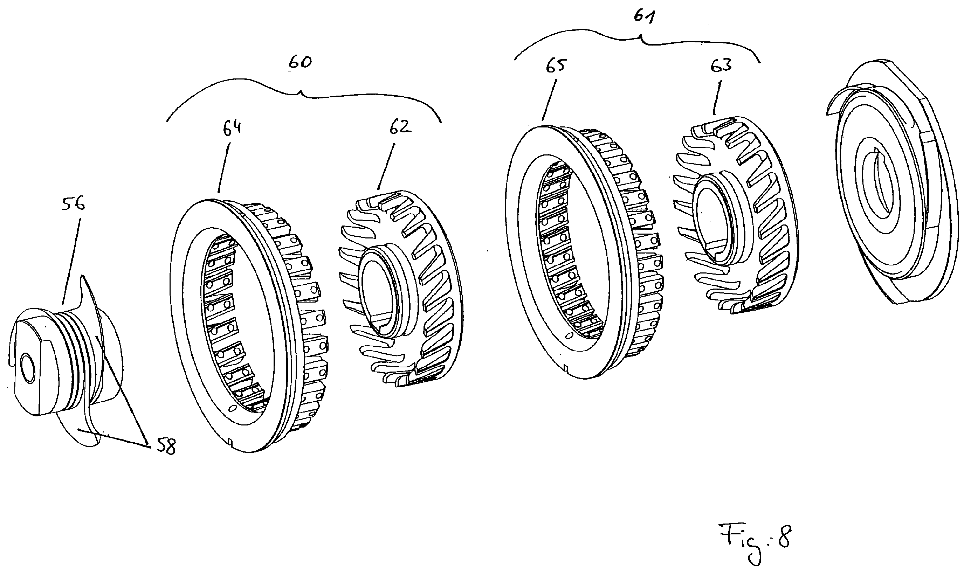

Die Figur 8 zeigt ein rotierendes Messersystem mit zwei Schneidsätzen 60, 61 in Explosionsdarstellung. Das zu zerkleinernde Produkt bewegt sich in der Zeichnung von links nach rechts und wird dabei zunächst von dem Vorschneider 56 grob zerkleinert und gleichzeitig zum nachfolgenden Schneidsatz 60 transportiert. Im gezeigten Ausführungsbeispiel ist der Vorschneider 56 mit drei Klingen 58 ausgestattet, die Klingenanzahl kann aber variabel dem Einsatzzweck angepasst werden. Im Schneidsatz 60 bewegt sich der Rotor 62 gegenüber dem Stator 64 und zerkleinert das Produkt somit weiter. Zweckmäßigerweise ist der Schneidsatz 61, der ebenfalls aus einem Rotor 63 und einem Stator 65 besteht, darauf ausgelegt, den Feinheitsgrad des Produkts weiter zu steigern. Durch die Anpassung der Messerspalte der Schneidsätze 60, 61 kann so der gewünschte Feinheitsgrad erreicht werden.

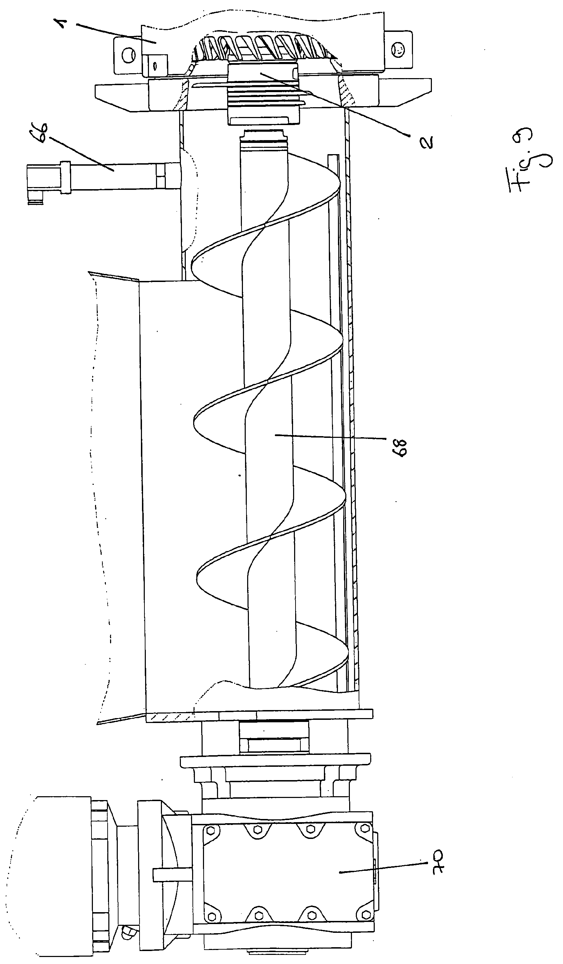

Die Figur 9 zeigt ein mögliches Ausführungsbeispiel der Zuführschnecke 68, die die stückige Rohware zum Messersystem 2 der Vorzerkleinerungseinheit 1 transportiert. Die Förderschnecke 68 wird dabei von einem regelbaren Getriebemotor 70 angetrieben. Der durch den Produktfluss zum Messersystem 2 hin aufgebaute Druck wird durch den Drucksensor 66 detektiert. Mittels eines geeigneten Regelungssystems kann dann die Zuführgeschwindigkeit so eingestellt werden, dass das System einen möglichst hohen Durchsatz erreicht, ohne zu verstopfen.

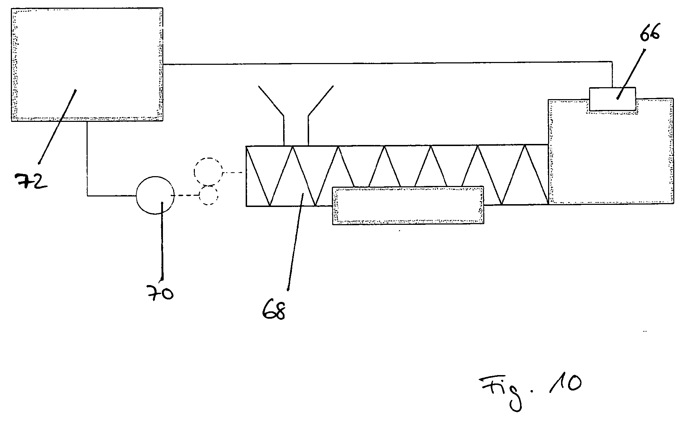

Figur 10 zeigt ein mögliches Steuerschema der Geschwindigkeitsregelung der Zuführschnecke 26. Ein Drucksensor 66 misst den durch die Förderschnecke 68 verursachten Produktdruck P_{prod}. Die Elektronik des Geschwindigkeitsreglers 72 vergleicht den gemessenen Produktdruck P_{prod} mit einem vorher bestimmten, produktspezifischen Referenzdruck P_{ref} und erhöht die Geschwindigkeit des Motors 70, der die Förderschnecke 68 antreibt, so lange P_{prod} kleiner als P_{ref} ist. Sobald der Produktdruck P_{prod} den Referenzdruck P_{ref} überschreitet, reduziert der Geschwindigkeitsregler 72 die Geschwindigkeit des Getriebemotors 70, sodass die Förderschnecke 68 eine kleinere Produktmenge pro Zeiteinheit transportiert und ein Verstopfen des Systems verhindert wird.

Der maximal zulässige Referenzdruck P_{ref} kann bei wasserhaltigen Produkten wie z. B. Früchten oder Gemüse einfach ermittelt werden. Beispielsweise kann dazu ein Probezylinder von z. B. 10cm² Querschnittsfläche mit dem zu verarbeitenden Produkt gefüllt werden. Mit einem Stempel wird dann das Produkt komprimiert und mit einem in der Wandung eingelassenen Drucksensor der Druck gemessen. Sobald Fruchtwasser aus dem Produkt austritt, ist der zulässige Druck in der Regel überschritten. Aus diesem Grenzdruck kann dann nach Abzug eines Sicherheitsbetrages P_{ref} festgelegt werden.

### Bezugszeichenliste

- 1: Vorzerkleinerungseinheit
- 2: Messersystem
- 4: Antrieb
- 6: Kochanlage
- 8: Pumpe
- 10: Röhrenheißhalter
- 11: Kühlsystem
- 12: Endbearbeitungseinheit
- 13: Messersystem
- 14: Stator
- 16: Rotor
- 18: Förderscheibe
- 20: Messerspalt
- 22: Trichter
- 24: tangentialer Austritt
- 26: Zuführschnecke
- 28: Vorschneider
- 30: Stator
- 32: Rotor
- 34: Förderscheibe
- 38: Messersystem
- 40: Vormischbereich
- 42: Dampfdüsen
- 44: Mischwelle
- 46: Stator
- 48: Rotor
- 50: Förderscheibe
- 52: Pumpe
- 54: Gehäuse
- 56: Vorschneider
- 58: Klingen
- 60: Schneidsatz
- 61: Schneidsatz
- 62: Rotor/Schneidkopf
- 63: Rotor/Schneidkopf
- 64: Stator/Schneidring
- 65: Stator/Schneidring
- 66: Drucksensor

## Patentansprüche

1. Verfahren zum Herstellen von pürierten, gekochten Nahrungsmitteln aus stückiger Rohware mit den Schritten:
- Vorzerkleinern der stückigen Rohware in einer Vorzerkleinerungseinheit (1),
- Kochen der vorzerkleinerten Rohware in einer kontinuierlich beschickbaren Kochanlage (6),
- Endbearbeitung des gekochten Produkts in einer Endbearbeitungseinheit (12),
**dadurch gekennzeichnet,**
**dass** die stückige Rohware vor dem Kochen in der Vorzerkleinerungseinheit (1) mittels eines ersten rotierenden Messersystems (2) derart in kleine Stücke geschnitten wird, dass aus der stückigen Rohware eine pumpfähige Masse wird, und dass die Endbearbeitung des gekochten Produkts mittels eines zweiten rotierenden Messersystems (13) in der Endbearbeitungseinheit (12) erfolgt.

2. Verfahren nach Anspruch 1, **dadurch gekennzeichnet, dass** die pumpfähige Masse in der kontinuierlich beschickbaren Kochanlage (6) mit Direktdampf vermischt und erhitzt wird.

3. Verfahren nach einem der vorstehenden Ansprüche, **dadurch gekennzeichnet, dass** die kontinuierlich beschickbare Kochanlage (6) ein geschlossenes System darstellt, und ein Kontakt der zu kochenden Nahrungsmittel mit der Raumluft verhindert wird.

4. Verfahren nach Anspruch 3, **dadurch gekennzeichnet, dass** das zu verarbeitende Nahrungsmittel während des gesamten Verfahrens von der Raumluft getrennt bleibt.

5. Verfahren nach einem der vorstehenden Ansprüche, **dadurch gekennzeichnet, dass** die Nahrungsmittel nach dem Kochen mittels eines Kühlsystems auf unter 95 °C gekühlt werden.

6. Verfahren nach einem der vorstehenden Ansprüche, **dadurch gekennzeichnet, dass** zumindest eines der rotierenden Messersysteme (2, 13) frequenzgeregelt wird.

7. Verfahren nach einem der vorstehenden Ansprüche, **dadurch gekennzeichnet, dass** ein Produktdruck (P_{prod}) an einem Eingang des Vorzerkleinerungssystems (1) gemessen wird.

8. Verfahren nach einem der vorstehenden Ansprüche, **dadurch gekennzeichnet, dass** anhand des gemessenen Produktdrucks (P_{prod}) eine Zufuhrgeschwindigkeit der Rohware geregelt wird.

9. Vorrichtung zum Herstellen von pürierten, gekochten Nahrungsmitteln aus stückiger Rohware, mit einem rotierenden Messersystem (2, 13) und einer Kochanlage (6),
**dadurch gekennzeichnet, dass** ferner vorgesehen sind
a) eine Vorzerkleinerungseinheit (1), die ein erstes rotierendes Messersystem (2) zur Verarbeitung der stückigen Rohware zu einer pumpfähigen Masse aufweist, und
b) eine Pumpe (8) zum Transportieren der vorzerkleinerten Rohware von der Vorzerkleinerungseinheit (1) zu der Kochanlage,
und dass
c) die Kochanlage eine kontinuierlich beschickbare Kochanlage (6) ist, und
d) eine Endbearbeitungseinheit (12) mit einem zweiten rotierenden Messersystem (13) zur Endbearbeitung des Nahrungsmittels vorgesehen ist.

10. Vorrichtung nach Anspruch 9, **dadurch gekennzeichnet, dass** die gesamte Vorrichtung ein geschlossenes System bildet, sodass die verarbeiteten Nahrungsmittel nach der Zuführung zu dem ersten Messersystem (2) während des gesamten weiteren Herstellungsverfahrens nicht mit der Raumluft in Kontakt kommen.

11. Vorrichtung nach Anspruch 9 oder 10, **dadurch gekennzeichnet, dass** das rotierende Messersystem (2) der Vorzerkleinerungseinheit (1) zumindest einen Stator (30; 64, 65), einen Rotor (32; 62, 63) und eine Förderscheibe (34) aufweist.

12. Vorrichtung nach einem der vorstehenden Ansprüche, **dadurch gekennzeichnet, dass** ein zweites rotierendes Messersystem (13) der Endbearbeitungseinheit (12) Messerspalte (20) aufweist, die kleiner als 0,05 mm sind.

13. Vorrichtung nach einem der vorstehenden Ansprüche, **dadurch gekennzeichnet, dass** ein Drucksensor (66) am Eingang der Vorzerkleinerungseinheit (1) angeordnet ist.

## Claims

1. A method for producing pureed, cooked foodstuffs from chunky raw material, comprising the following steps:
- pre-chopping the chunky raw material in a pre-chopping unit (1),
- cooking the pre-chopped raw material in a continuously chargeable cooking plant (6),
- final processing of the cooked product in a final-processing unit (12),
**characterised in that**
prior to cooking, the chunky raw material is cut into small pieces in the pre-chopping unit (1) by means of a first rotating knife system (2) such that the chunky raw material becomes a mass capable of being pumped, and that the final processing of the cooked product is carried out by means of a second knife system (13) in the final-processing unit (12).

2. The method according to claim 1, **characterised in that** the mass capable of being pumped is mixed and heated with direct steam in the continuously chargeable cooking plant (6).

3. The method according to any one of the preceding claims, **characterised in that** the continuously chargeable cooking plant (6) constitutes a closed system, and contact of the foodstuffs to be cooked with the ambient air is prevented.

4. The method according to claim 3, **characterised in that** the foodstuff to be processed stays separate from ambient air throughout the entire method.

5. The method according to any one of the preceding claims, **characterised in that**, after cooking, the foodstuffs are cooled to below 95°C by means of a cooling system.

6. The method according to any one of the preceding claims, **characterised in that** at least one of the rotating knife systems (2, 13) is frequency-regulated.

7. The method according to any one of the preceding claims, **characterised in that** a product pressure (P_{prod}) is measured at an inlet of the pre-chopping system (1).

8. The method according to any one of the preceding claims, **characterised in that** a feed rate of the raw material is regulated based on the measured product pressure (P_{prod}).

9. A device for producing pureed, cooked foodstuffs from chunky raw material, having a rotating knife system (2, 13) and a cooking plant (6), **characterised in that**, there are also provided
a) a pre-chopping unit (1) having a first rotating knife system (2) for processing the chunky raw material into a mass capable of being pumped, and
b) a pump (8) for transporting the pre-chopped raw material from the pre-chopping unit (1) to the cooking plant,
and that
c) the cooking plant is a continuously chargeable cooking plant (6), and
d) a final-processing unit (12) with a second rotating knife system (13) is provided for the final processing of the foodstuff.

10. The device according to claim 9, **characterised in that** the entire device forms a closed system, so that the processed foodstuffs, after being fed to the first knife system (2), do not come into contact with the ambient air throughout the entire rest of the production method.

11. The device according to claim 9 or 10, **characterised in that** the rotating knife system (2) of the pre-chopping unit (1) has at least a stator (30; 64, 65), a rotor (32; 62, 63) and a conveyor disc (34).

12. The device according to any one of the preceding claims, **characterised in that** a second rotating knife system (13) of the final-processing unit (12) has knife gaps (20) that are smaller than 0.05 mm.

13. The device according to any one of the preceding claims, **characterised in that** a pressure sensor (66) is disposed at the inlet of the pre-chopping unit (1).

## Revendications

1. Procédé pour la fabrication de produits alimentaires cuits en purée à partir de produits crus en morceaux, comprenant les étapes consistant à:
- effectuer un broyage préalable des produits crus en morceaux dans une unité de broyage préalable (1),
- faire cuire les produits crus préalablement broyés dans une installation de cuisson à chargement continu (6),
- effectuer un traitement final des produits cuits dans une unité de traitement final (12),
**caractérisé en ce que**
avant la cuisson, les produits crus en morceaux sont coupés en petits morceaux dans l'unité de broyage préalable (1) au moyen d'un premier système de couteaux en rotation (2) de telle façon que les produits crus en morceaux deviennent une masse capable d'être pompée, et **en ce que** le traitement final des produits cuits a lieu au moyen d'un second système de couteaux en rotation (13) dans l'unité de traitement final (12).

2. Procédé selon la revendication 1, **caractérisé en ce que** la masse capable d'être pompée est mélangée avec de la vapeur directe et chauffée dans l'installation de cuisson (6) à chargement continu.

3. Procédé selon l'une des revendications précédentes, **caractérisé en ce que** l'installation de cuisson (6) à chargement continu représente un système fermé, et un contact du produit alimentaire à cuire avec l'air ambiant est empêché.

4. Procédé selon la revendication 3, **caractérisé en ce que** le produit alimentaire à traiter reste séparé vis-à-vis de l'air ambiant pendant la totalité du procédé.

5. Procédé selon l'une des revendications précédentes, **caractérisé en ce que**, après la cuisson, le produit alimentaire est refroidi à une température au-dessous de 95°C au moyen d'un système de refroidissement.

6. Procédé selon l'une des revendications précédentes, **caractérisé en ce que** l'un au moins des systèmes de couteaux en rotation (2, 13) est régulé en fréquence.

7. Procédé selon l'une des revendications précédentes, **caractérisé en ce qu'**une pression du produit (P_{prod}) est mesurée à une entrée du système de broyage préalable (1).

8. Procédé selon l'une des revendications précédentes, **caractérisé en ce qu'**une vitesse d'amenée des produits crus est régulée au moyen de la pression du produit (P_{prod}) mesurée.

9. Dispositif pour la fabrication de produits alimentaires cuits en purée à partir de produits crus en morceaux, comprenant un système de couteaux en rotation (2, 13) et une installation de cuisson (6), **caractérisé en ce qu'**il est en outre prévu
a) une unité de broyage préalable (1) qui comprend un premier système de couteaux en rotation (2) pour le traitement des produits crus en morceaux, et
b) une pompe (8) pour transporter les produits crus préalablement broyés depuis l'unité de broyage préalable (1) jusqu'à l'installation de cuisson,
et **en ce que**
c) l'installation de cuisson est une installation de cuisson (6) à chargement continu, et
d) il est prévu une unité de traitement final (12) avec un second système de couteaux en rotation (13) pour le traitement final du produit alimentaire.

10. Dispositif selon la revendication 9, **caractérisé en ce que** la totalité du dispositif forme un système fermé, de sorte que les produits alimentaires traités ne viennent pas en contact avec l'air ambiant après avoir été amenés au premier système de couteaux (2) pendant la totalité de la poursuite du procédé de fabrication.

11. Dispositif selon la revendication 9 ou 10, **caractérisé en ce que** le système de couteaux en rotation (2) de l'unité de broyage préalable (1) comprend au moins un stator (30 ; 64, 65), un rotor (32 ; 62, 63) et une plaque de convoyage (34).

12. Dispositif selon l'une des revendications précédentes, **caractérisé en ce qu'**un second système de couteaux en rotation (13) de l'unité de traitement final (12) présente des intervalles entre couteaux (20) qui sont plus petits que 0,05 mm.

13. Dispositif selon l'une des revendications précédentes, **caractérisé en ce qu'**un capteur de pression (66) est agencé à l'entrée de l'unité de broyage préalable (1).
